# EUROPÄISCHE PATENTSCHRIFT

(11) **EP 4 505 764 B1**
(45) Veröffentlichungstag und Bekanntmachung des Hinweises auf die Patenterteilung: **12.08.2026**
(21) Anmeldenummer: 23704107.4
(22) Anmeldetag: 07.02.2023
(51) Int. Cl.: H04W 4/80, B62M 6/45, H04L 67/12

(54) **VERFAHREN ZUR PAARUNG EINER STEUERVORRICHTUNG MIT EINEM ELEKTROFAHRRAD**
METHOD FOR PAIRING A CONTROLLER WITH AN ELECTRIC BICYCLE
PROCÉDÉ D'APPARIEMENT D'UN DISPOSITIF DE COMMANDE AVEC UNE BICYCLETTE ÉLECTRIQUE

(30) Priorität: 07.04.2022 DE 102022203517
(43) Veröffentlichungstag der Anmeldung: 12.02.2025
(73) Patentinhaber: Robert Bosch GmbH, 70442 Stuttgart (DE)
(72) Erfinder: WARMER, Christoph, 70178 Stuttgart (DE); WODNIOK, Adrian, 60389 Frankfurt Am Main (DE); LUNA MATOS, Fred, 12099 Berlin (DE); CARELLO, Francesco, 65936 Frankfurt Am Main (DE); GRAENING, Tobias, 63165 Muehlheim (DE)
(86) Internationale Anmeldenummer: PCT/EP2023/052957
(87) Internationale Veröffentlichungsnummer: WO 2023/193978

(56) Entgegenhaltungen:
- US-A1- 2018 197 401
- US-A1- 2021 206 454
- US-A1- 2021 291 922

## Beschreibung

### Offenbarung der Erfindung

Die Erfindung betrifft ein Verfahren zur Anpassung einer Steuervorrichtung für ein Elektrofahrrad nach Anspruch 1 und eine Steuervorrichtung nach Anspruch 7.

Vorteilhaft kann dadurch die Steuervorrichtung optimal auf das Elektrofahrrad angepasst werden.

Die Steuervorrichtung ist im mit dem Elektrofahrrad verbundenen Zustand derart verbunden, dass Daten und/oder Informationen zwischen der Steuervorrichtung und dem Elektrofahrrad austauschbar sind. Insbesondere weist die Steuervorrichtung eine Anzeigeeinheit auf, die zur Anzeige von Betriebsinformationen des Elektrofahrrads ausgebildet ist. Bei den Betriebsinformationen kann es sich beispielsweise um einen Ladezustand einer Energieversorgungseinheit des Elektrofahrrads, eine Geschwindigkeit des Elektrofahrrads, einen derzeit gewählten Unterstützungsmodus oder eine Fehlerinformation handeln. Des Weiteren ist denkbar, dass das Elektrofahrrad weitere Betriebsparameter bereitstellt, beispielsweise eine Positionskenngröße, die als eine geographische Koordinate und/oder eine Höheninformation ausgebildet sein kann. Zudem ist die Steuervorrichtung zur Steuerung oder Regelung des Elektrofahrrads ausgebildet. Unter einer Steuerung des Elektrofahrrads soll in diesem Zusammenhang insbesondere verstanden werden, dass die Steuervorrichtung zur Steuerung, Regelung oder Einstellung einer Elektrofahrradfunktion ausgebildet ist. Beispielsweise ist denkbar, dass die Steuervorrichtung derart ausgebildet ist, dass eine Antriebseinheit des Elektrofahrrads mittels der Steuervorrichtung aktivierbar, deaktivierbar und/oder sperrbar ist. Es ist ebenso denkbar, dass die Steuervorrichtung zur Einstellung des Elektrofahrrads durch den Benutzer ausgebildet ist. Beispielsweise ist denkbar, dass über die Steuervorrichtung die Unterstützungsmodi des Elektrofahrrads einstellbar sind, wobei abhängig von dem gewählten Unterstützungsmodus die Antriebseinheit des Elektrofahrrads angesteuert wird. Die Steuervorrichtung ist vorzugsweise als eine lösbar mit dem Elektrofahrrad verbindbare Vorrichtung ausgebildet, beispielsweise als ein Smartphone oder eine Smartwatch.

Unter einem Elektrofahrrad soll im Zusammenhang dieser Anmeldung insbesondere ein Fahrrad verstanden, dass eine Antriebseinheit zur Unterstützung des Fahrers aufweist. Das Elektrofahrrad ist vorzugsweise als ein eBike, ein Pedelec, ein Lastenfahrrad, ein Klappfahrrad oder dergleichen ausgebildet. Die Antriebseinheit weist einen Motor auf, der beispielsweise als ein Mittelmotor oder als ein Nabenmotor ausgebildet sein kann. Der Motor ist vorzugsweise als ein Elektromotor ausgebildet. Die Antriebseinheit ist mit einer Energieversorgungsvorrichtung zur Versorgung der Antriebseinheit mit Energie verbunden. Die Energieversorgungseinheit ist vorzugsweise als ein Akkupack ausgebildet und weist ein Akkugehäuse auf, das bevorzugt lösbar mit einem Rahmen des Fahrrads verbunden ist. Das Elektrofahrrad umfasst eine Elektronik mit einer Steuereinheit zur Steuerung oder Regelung des Elektrofahrrads. Die Elektronik umfasst vorzugsweise eine Sensoreinheit, wobei die Sensoreinheit beispielsweise Bewegungssensoren, Drehmomentsensoren, Geschwindigkeitssensoren, GPS-Sensoren, Magnetsensoren oder dergleichen aufweisen kann. Zudem umfasst die Elektronik eine Kommunikationsschnittstelle zur drahtlosen Verbindung des Elektrofahrrads mit einer Steuervorrichtung und/oder einem Server.

Die Verbindung der Steuervorrichtung mit dem ersten Server erfolgt vorzugsweise über einen drahtlosen Datenaustausch. Die Steuervorrichtung weist hierzu insbesondere eine Kommunikationsschnittstelle auf. Die Kommunikationsschnittstelle kann beispielsweise als eine Bluetooth-, WLAN-, LTE-, 5G-, Zigbee-Schnittstelle oder dergleichen ausgebildet sein. Die Verbindung kann automatisch durch Starten eines Computerprograms erfolgen oder durch eine Benutzereingabe initiiert werden. Zur Identifikation der Steuervorrichtung beziehungsweise des Benutzers gegenüber dem ersten Server wird eine Nutzer ID übertragen. Insbesondere werden dadurch der Steuervorrichtung Daten, die dem der Nutzer ID zugeordneten Nutzerkonto zugeordnet sind, bereitgestellt.

Die Verbindung der Steuervorrichtung mit dem Elektrofahrrad kann durch die gleiche Kommunikationsschnittstelle erfolgen, wie die Verbindung der Steuervorrichtung mit dem ersten Server. Alternativ ist auch denkbar, dass die Verbindung über eine weitere Kommunikationsschnittstelle erfolgt.

Insbesondere wird die erste Fahrrad ID und die zweite Fahrrad ID durch das Elektrofahrrad bereitgestellt. Vorzugsweise weist das Elektrofahrrad eine Speichereinheit auf, in welcher die erste Fahrrad ID und die zweite Fahrrad ID gespeichert sind. Die erste und die zweite Fahrrad ID werden dem ersten Server über die Steuervorrichtung bereitgestellt und können auf dem Server mit dem Nutzerkonto und/oder der Nutzer ID verknüpft werden.

Die Anpassungsdaten des ersten Servers werden der Steuervorrichtung bereitgestellt. Zusätzlich ist denkbar, dass die Anpassungsdaten oder weitere Anpassungsdaten basierend auf der ersten Fahrrad ID dem Elektrofahrrad bereitgestellt werden.

Die Verbindung der Steuervorrichtung mit dem zweiten Server erfolgt vorzugsweise über die gleiche Kommunikationsschnittstelle wie mit dem ersten Server. Alternativ oder zusätzlich ist aber auch denkbar, dass die Verbindung der Steuervorrichtung mit dem zweiten Server über eine andere Kommunikationsschnittstelle der Steuervorrichtung erfolgt.

Die Verbindung erfolgt insbesondere durch eine Benutzereingabe, wobei zur Identifikation der Steuervorrichtung beziehungsweise des Benutzers gegenüber dem zweiten Server eine weitere Nutzer ID übertragen wird. Die Nutzer ID und die weitere Nutzer ID unterscheiden sich dabei und sind jeweils anderen Servern zugeordnet.

Nach der Verbindung der Steuervorrichtung mit dem zweiten Server können beziehungsweise werden dem zweiten Server unterschiedliche Informationen bereitgestellt, wie beispielsweise Daten des Elektrofahrrads, der Steuervorrichtung und/oder des ersten Servers. Beispielsweise ist denkbar, dass dem zweiten Server die erste Fahrrad ID, die zweite Fahrrad ID, Odometer Daten des Elektrofahrrads, Informationen bezüglich Wartungs- und/oder Service-Intervallen, Ortskenngrößen, Aktivitätsinformationen, Benutzerdaten, Zeitkenngrößen, etc. bereitgestellt werden.

Nach der Verbindung der Steuervorrichtung mit dem zweiten Server können beziehungsweise werden dem ersten Server oder der Steuervorrichtung unterschiedliche Informationen des zweiten Servers bereitgestellt werden, wie beispielsweise einen Namen des Elektrofahrrads, ein Produktname oder eine Modellbezeichnung, eine Bild des Fahrradmodells, eine Seriennummer, Informationen bezüglich der verbauten Komponenten, Einstellungsparameter für die Antriebseinheit, die Dämpfungseinheiten, die Schaltungseinheiten, etc.

Zudem wird vorgeschlagen, dass der erste Server mit dem zweiten Server zum direkten Datenaustausch verknüpft wird. Vorteilhaft können dadurch direkt Daten bereitgestellt und gegebenenfalls an die Steuervorrichtung weitergeleitet werden. Alternativ ist ebenfalls denkbar, dass der erste Server und der zweite Server nicht oder nur über die Steuervorrichtung miteinander zum Datentransfer verknüpft sind. Vor dem Verknüpfen erfolgt die Kommunikation der Steuervorrichtung nur mit dem ersten Server, nach dem Verknüpfen kann zusätzlich auch eine Kommunikation direkt mit dem zweiten Server erfolgen.

Des Weiteren wird vorgeschlagen, dass die Verbindung der Steuervorrichtung mit dem Elektrofahrrad über ein Pairing erfolgt. Insbesondere weist die Steuervorrichtung und das Elektrofahrrad jeweils eine Bluetooth Kommunikationsschnittstelle auf. Das Pairing kann automatisch und/oder semiautomatisch erfolgen, wobei bei das semiautomatischen Pairing zumindest eine Benutzereingabe erfordert. Es ist beispielhaft denkbar, dass das erste Pairing semiautomatisch erfolgt. Nach dem ersten Pairing sind das Elektrofahrrad und die Steuervorrichtung miteinander gekoppelt und verbunden. Die Verbindung wird dabei automatisch beendet, wenn sich die Steuervorrichtung außerhalb der Reichweite der Kommunikationsschnittstelle des Elektrofahrrads befindet. Die Steuervorrichtung und das Elektrofahrrad verbleiben allerdings gekoppelt und können automatisch oder semiautomatisch wieder miteinander verbunden werden, ohne erneut den Pairingprozess durchführen zu müssen. Vorzugsweise ist die Steuervorrichtung derart ausgebildet, dass im mit dem Elektrofahrrad verbundenen Zustand zumindest eine zusätzliche Funktion freigeschaltet ist. Die zusätzliche Funktion kann beispielsweise als eine Möglichkeit zur Anpassung der Unterstützungsmodi, eine Navigationsfunktion, eine Option zur Einbindung zusätzlicher Geräte oder dergleichen ausgebildet sein.

Weiterhin wird vorgeschlagen, dass die erste Fahrrad ID eine Herstellerkenngröße und/oder eine Markenkenngröße umfasst. Vorteilhaft kann dadurch eine herstellerspezifische oder markenspezifische Anpassung der Steuervorrichtung vorgenommen werden.

Zudem wird vorgeschlagen, dass die zweite Fahrrad ID eine Typkenngröße und/oder eine Artikelkenngröße, wie beispielsweise eine Artikelnummer, umfasst. Vorteilhaft kann dadurch beispielsweise eine modellspezifische Anpassung der Steuervorrichtung vorgenommen werden.

Des Weiteren wird vorgeschlagen, dass die Steuervorrichtung, insbesondere eine Anzeigeeinheit der Steuervorrichtung, basierend auf den Anpassungsdaten angepasst wird. Insbesondere wird die Anzeigeeinheit derart angepasst wird, dass eine Herstellerinformation oder eine Markeninformation angezeigt wird. Die Herstellerinformation oder Markeninformation kann dabei im gekoppelten und im verbundenen Zustand oder nur im verbundenen Zustand der Steuervorrichtung mit dem Elektrofahrrad angezeigt werden.

Weiterhin wird vorgeschlagen, dass die Verbindung der Steuervorrichtung mit dem ersten Server über ein erster Nutzerkonto und die Verbindung der Steuervorrichtung mit dem zweiten Server über ein zweites Nutzerkonto erfolgt. Das erste Nutzerkonto und das zweite Nutzerkonto sind somit zunächst unabhängig voneinander ausgebildet und durch den Benutzer unabhängig anlegbar.

Zudem wird vorgeschlagen, dass die Steuervorrichtung, insbesondere die Anzeigeeinheit der Steuervorrichtung, basierend auf den weiteren Anpassungsdaten angepasst wird. Vorteilhaft kann dadurch die Steuervorrichtung optimal an das Elektrofahrrad angepasst werden. Die weiteren Anpassungsdaten können beispielsweise als eine Modellbezeichnung, eine Bild des Produkts beziehungsweise des Elektrofahrrads, weitere Zusatzfunktionen für die Steuervorrichtung, etc. umfassen.

Des Weiteren betrifft die Erfindung eine Steuervorrichtung für ein Elektrofahrrad, wobei die Steuervorrichtung zur Steuerung oder Regelung des Elektrofahrrads ausgebildet ist, wobei die Steuervorrichtung lösbar mit dem Elektrofahrrad verbindbar ausgebildet ist, wobei die Steuervorrichtung eine Anzeigeeinheit umfasst, dadurch gekennzeichnet, dass die Anzeigeeinheit basierend auf einer ersten Fahrrad ID und einer zweiten Fahrrad ID anpassbar ausgebildet ist.

### Stand der Technik

Die Patentanmeldung US 2021/206454 A1 offenbart ein Verfahren zur automatischen Konfiguration und Kalibrierung von stufenlosen Getrieben (CVT, continuously variable transmission) eines Steuerungssystems eines Fahrrads.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine schematische Ansicht eines Systems zur Durchführung des Verfahrens zur Anpassung einer Steuervorrichtung für ein Elektrofahrrad;
Fig. 2 ein Flussdiagramm des Verfahrens zur Anpassung der Steuervorrichtung;
Fig. 3a eine schematische Anzeige der Steuervorrichtung vor der Verbindung mit dem Elektrofahrrad;
Fig. 3b eine schematische Anzeige der Steuervorrichtung nach der Verbindung mit dem Elektrofahrrad;
Fig. 3c eine schematische Anzeige der Steuervorrichtung nach Verbindung mit einem zweiten Server.

### Beschreibung der Ausführungsbeispiele

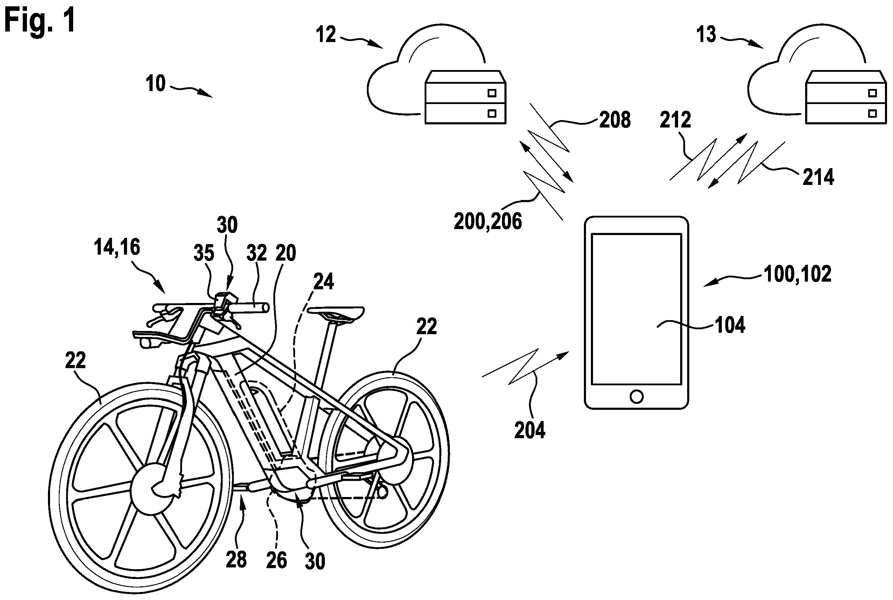

In Fig. 1 ist ein System 10 zur Anpassung einer Steuervorrichtung 100 beschrieben

Das System 10 umfasst einen ersten Server 12 und einen zweiten Server 13.

Des Weiteren umfasst das System 10 zumindest eine Fahrradeinheit 14. Die Fahrradeinheit 14 ist beispielhaft als ein Elektrofahrrad 16 ausgebildet. Das Elektrofahrrad 16 kann beispielsweise als ein Pedelec oder als ein E-Bike ausgebildet sein.

Das Elektrofahrrad 16 weist ein Gehäuse in Form eines Rahmens 20 bzw. eines Fahrradrahmens auf. Mit dem Rahmen 20 sind zwei Räder 22 verbunden. Zudem weist das Elektrofahrrad 16 einen Energieversorgungseinheit 24 in Form eines Akkupacks auf. Zudem weist das Elektrofahrrad 16 eine Antriebseinheit 26 auf, die einen Elektromotor bzw. Hilfsmotor umfasst. Der Elektromotor ist vorzugsweise als ein Permanentmagnet-erregter, bürstenloser Gleichstrommotor ausgebildet. Der Elektromotor ist beispielhaft als ein Mittelmotor ausgebildet, wobei auch ein Nabenmotor oder dergleichen denkbar ist. Das Elektrofahrrad 16, insbesondere die Antriebseinheit 26 des Elektrofahrrads 16, wird über die Energieversorgungseinheit 24 mit Energie versorgt. Die Energieversorgungseinheit 24 kann von außen am Rahmen 20 befestigbar oder im Rahmen 20 integriert ausgebildet sein.

Die Antriebseinheit 26 umfasst eine eine Steuereinheit umfassende Elektronik (nicht dargestellt), die zur Steuerung oder Regelung des Elektrofahrrads 16, insbesondere des Elektromotors, ausgebildet ist. Das Elektrofahrrad 16 weist eine Tretkurbel 28 auf. Die Tretkurbel 28 weist eine Tretkurbelwelle (nicht dargestellt) auf.

Die Elektronik und die Antriebseinheit 26 mit dem Elektromotor und der Tretkurbelwelle sind in einem mit dem Rahmen 20 verbundenen Antriebsgehäuse angeordnet. Die Antriebsbewegung des Elektromotors wird vorzugsweise über ein Getriebe (nicht dargestellt) auf die Tretkurbelwelle übertragen, wobei die Größe der Unterstützung durch die Antriebseinheit 26 mittels der Elektronik gesteuert oder geregelt wird. Die Elektronik ist dazu ausgebildet, die Antriebseinheit derart anzusteuern, dass der Fahrer des Elektrofahrrads 16 beim Pedalieren unterstützt wird. Vorzugsweise ist die Steuereinheit durch den Fahrer bedienbar ausgebildet, sodass der Fahrer den Unterstützungsgrad einstellen kann.

Die Elektronik umfasst eine nicht dargestellte Kommunikationsschnittstelle, die zur drahtlosen Verbindung des Elektrofahrrads 16 mit der Steuervorrichtung 100 ausgebildet ist. Die Kommunikationsschnittstelle ist beispielhaft als eine kurzreichweite Kommunikationsschnittstelle, insbesondere eine Bluetooth Schnittstelle, ausgebildet ist. Das Elektrofahrrad 16 umfasst zudem eine zweite Kommunikationsschnittstelle in Form einer langreichweitigen Kommunikationsschnittstelle, insbesondere einer LTE-Schnittstelle. Im Gegensatz zu der kurzreichweitigen Kommunikationsschnittstelle ist mittels der langreichweitigen Kommunikationsschnittstelle eine direkte Datenverbindung mit dem ersten Server 12 oder dem zweiten Server 13, die beispielhaft eine Verbindung zum Internet aufweisen, möglich.

Die Elektronik umfasst eine Speichereinheit, wobei in der Speichereinheit eine erste Fahrrad ID und eine zweite Fahrrad ID gespeichert sind. Die erste Fahrrad ID und/oder die zweite Fahrrad ID sind beispielhaft mittels der Bluetooth Schnittstelle auf das Elektrofahrrad 16 übertragen worden. Es ist ebenfalls denkbar, dass die Speicherung bei der Bedatung des Elektrofahrrads beziehungsweise der Elektronik oder mittels einer anderen Kommunikationsschnittstelle erfolgt. Zudem umfasst das Elektrofahrrad 16, insbesondere die Elektronik des Elektrofahrrads 16, eine Sensoreinheit. Die Sensoreinheit umfasst beispielhaft einen Geschwindigkeitssensor, zumindest einen Bewegungssensor, einen GPS-Sensor zur Bestimmung der Position und einen Drehmomentsensor.

Zudem umfasst das Elektrofahrrad 16 eine Bedieneinheit 30 zur Bedienung des Elektrofahrrads 16. Die Bedieneinheit 30 ist an einem Lenker 32 des Elektrofahrrads 16 angeordnet. Beispielhaft ist die Bluetooth Schnittstelle in einem Gehäuse 35 der Bedieneinheit 30 angeordnet. Die Bedieneinheit 30 weist beispielhaft einen nicht näher dargestellten Ein/Aus-Schalter auf, wobei mittels einer Betätigung des Schalters das Elektrofahrrad 16, insbesondere die Antriebseinheit 26, aktivierbar ausgebildet ist. Zudem ist die Elektronik mittels der Bedieneinheit 30 ansteuerbar ausgebildet, beispielsweise ist mittels einer Bedienung der Bedieneinheit 30 eine Auswahl eines Unterstützungsmodus des Elektrofahrrads 16 möglich.

Die Steuervorrichtung 100 ist beispielhaft als ein Smartphone 102 ausgebildet. Die Steuervorrichtung 100 umfasst eine Anzeigeeinheit 104, die zur Anzeige von Informationen ausgebildet ist. Die Anzeigeeinheit 104 ist beispielhaft als ein berührungsempfindliches Display ausgebildet, sodass die Steuervorrichtung 100 mittels einer Betätigung beziehungsweise einer Berührung der Anzeigeeinheit 104 bedienbar und/oder steuerbar ist.

Die Steuervorrichtung 100 weist beispielhaft ein Betriebssystem auf, das zur Ausführung von Anwendungssoftware (App) ausgebildet ist. Die Steuervorrichtung 100 weist zumindest eine Fahrrad-App auf, die zur Anzeige von Betriebsinformationen des Elektrofahrrads 16 und/oder zur Steuerung des Elektrofahrrads 16 ausgebildet ist.

Die Steuervorrichtung 100 weist zumindest eine kurzreichweitige Kommunikationsschnittstelle auf, die zu der kurzreichweitigen Kommunikationsschnittstelle des Elektrofahrrads 16 korrespondiert. Die kurzreichweitige Kommunikationsschnittstelle ist beispielhaft als eine Bluetooth Schnittstelle ausgebildet. Die Steuervorrichtung 100 kann abhängig oder unabhängig von der Fahrrad-App eine Verbindung mit dem Elektrofahrrad 16 erstellen. Diese Verbindung erfolgt beispielhaft über einen Bluetooth Pairing Prozess. Durch den Pairing Prozess werden die Steuervorrichtung 100 und das Elektrofahrrad 16 miteinander gekoppelt und verbunden. Wird die Steuervorrichtung 100 von dem Elektrofahrrad 16 physisch getrennt, erfolgt auch eine Trennung der drahtlosen Kommunikation, sie verbleiben allerdings im gekoppelten Zustand.

Zudem umfasst die Steuervorrichtung 100 zumindest eine langreichweitige Kommunikationsschnittstelle zur drahtlosen Kommunikation mit dem ersten Server 12 und dem zweiten Server 13. Die langreichweitige Kommunikationsschnittstelle ist beispielhaft als eine 5G-Schnittstelle ausgebildet.

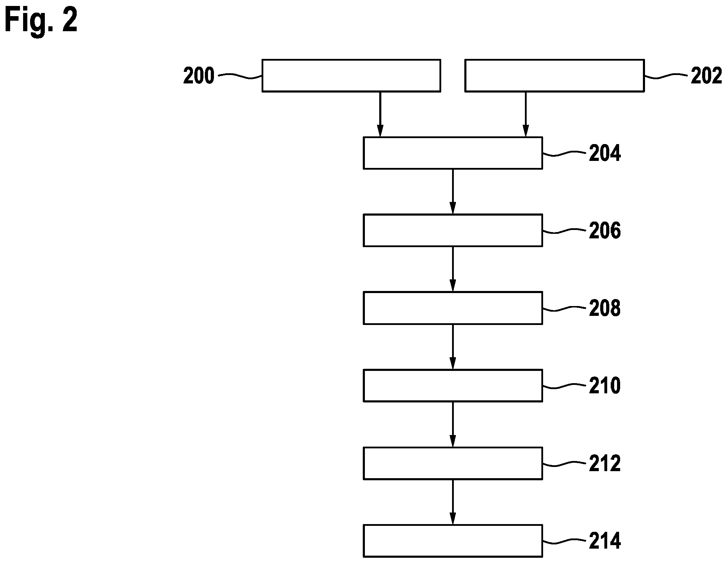

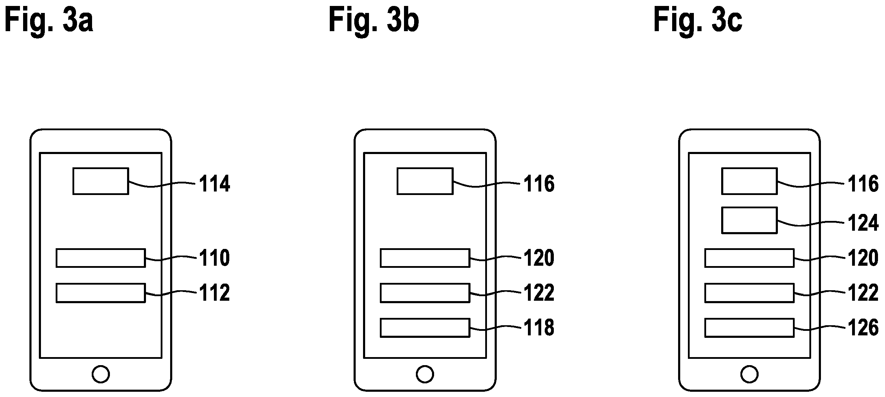

In Fig. 2 ist ein Flussdiagramm mit dem erfindungsgemäßen Verfahren beschrieben. In Fig. 3a bis 3c sind mögliche Anzeigen der Steuervorrichtung 100 zu unterschiedlichen Zeitpunkten des Verfahrens schematisch dargestellt.

In einem ersten Verfahrensschritt 200 erfolgt eine Verbindung der Steuervorrichtung 100 mit dem ersten Server 12. Der Benutzer gibt hierfür eine Nutzer ID an beziehungsweise erstellt diese, um sich gegenüber dem ersten Server 12 zu authentifizieren.

Vor oder nach der Verbindung der Steuervorrichtung 100 mit dem ersten Server 12 können erste Funktionen, wie sie beispielsweise schematisch in Fig. 3a gezeigt sind, durch die Anzeigeeinheit 104 angezeigt werden. Die Funktionen können dabei durch den Benutzer ausgewählt oder gestartet werden. Beispielsweise kann mittels Funktion 110 ein Pairingprozess zwischen der Steuervorrichtung 100 und dem Elektrofahrrad 16 gestartet werden und/oder nach einem für das Pairing geeigneten Elektrofahrrad 16 in der Umgebung gesucht werden. Es sind weitere Funktionen denkbar, wie beispielsweise eine Funktion 112, die den Benutzer auf ein Hilfe-Zentrum weiterleitet. Zudem kann die Anzeigeeinheit 104 ein erstes Label 114 anzeigen, dass beispielsweise als Herstellername oder Herstellerlogo einer Systemkomponente des Elektrofahrrads 16 ausgebildet ist. Die Systemkomponente kann beispielsweise als eine Antriebseinheit 26, als eine Energieversorgungseinheit 24 oder ein HMI des Elektrofahrrads 16 ausgebildet sein. Die Systemkomponente umfasst insbesondere die kurzreichweitige Kommunikationsschnittstelle. Der Hersteller der Systemkomponente unterscheidet sich insbesondere von dem Hersteller des Elektrofahrrads. Unter einem Hersteller soll im Zusammenhang dieser Anmeldung insbesondere ein Hersteller, Verkäufer und/oder Anbieter verstanden werden. Der erste Server 12 ist dem Hersteller der Systemkomponente zugeordnet.

In einem zweiten Verfahrensschritt 202 erfolgt eine Verbindung der Steuervorrichtung 100 mit einem Elektrofahrrad 16 über ein Pairing.

In einem weiteren Verfahrensschritt 204 werden durch das verbundene Elektrofahrrad eine erste Fahrrad ID und eine zweite Fahrrad ID bereitgestellt. Die erste Fahrrad ID umfasst beispielhaft eine Markenkenngröße und die zweite Fahrrad ID umfasst beispielhaft eine Artikelnummer.

In einem weiteren Verfahrensschritt 206 wird die erste Fahrrad ID, optional die erste Fahrrad ID und die zweite Fahrrad ID, dem ersten Server 12 durch die Steuervorrichtung 100 bereitgestellt.

In einem weiteren Verfahrensschritt 208 werden der Steuervorrichtung 100 durch den ersten Server 12 Anpassungsdaten basierend auf der ersten Fahrrad ID bereitgestellt.

In einem weiteren Verfahrensschritt 210 erfolgt eine Anpassung der Steuervorrichtung 100, insbesondere der Fahrrad-APP der Steuervorrichtung 100, basierend auf den Anpassungsdaten. Durch die Anpassungsdaten des ersten Servers 12 kann beispielsweise das Label 114 in ein geänderte Label 116 geändert werden, wie in Fig. 3b schematisch dargestellt ist. Das geänderte Label 116 ist vorzugsweise dem Hersteller des Elektrofahrrads 16 zugeordnet. Das geänderte Label 116 kann beispielsweise als Herstellername oder Logo ausgebildet sein. Zusätzlich wird der Steuervorrichtung 100 durch die Anpassungsdaten eine Verbindungsoption 118 bereitgestellt, wobei mittels der Verbindungsoption die Steuervorrichtung 100 mit dem zweiten Server 13 verbindbar ist.

Unabhängig von den Anpassungsdaten weist die Steuervorrichtung 100 im verbundenen Zustand Fahrradfunktionen auf, die zur Steuerung des Elektrofahrrads 16 oder zur Anzeige von Betriebsinformationen des Elektrofahrrads 16 ausgebildet sind. Beispielsweise weist die Steuervorrichtung 100 eine Fahrradfunktion 120 auf, die zur Einstellung eines Unterstützungsmodus ausgebildet. Der Benutzer kann beispielhaft zwischen den Modi Eco, Tour, eMTB und Turbo wählen, wobei basierend auf der Auswahl die Ansteuerung der Antriebseinheit 26 des Elektrofahrrads 16 angepasst wird. Zudem weist die Steuervorrichtung 100 ein weitere Fahrradfunktion 122 auf, die als eine Geschwindigkeitsanzeige und eine Ladezustandsanzeige der Energieversorgungseinheit 24 ausgebildet ist.

In einem weiteren Verfahrensschritt 212 wird insbesondere durch die Verbindungsoption 118 eine Verbindung der Steuervorrichtung 100 mit dem zweiten Server 13 hergestellt. Die Verbindung erfolgt vorzugsweise mittels einer zweiten Nutzer ID zur Authentifizierung mit dem zweiten Server 13.

In einem weiteren Verfahrensschritt 214 erfolgt eine Bereitstellung von weiteren Anpassungsdaten des zweiten Servers 14 basierend auf der zweiten Fahrrad ID. Basierend auf der weiteren Anpassungsdaten erfolgt eine zusätzliche Anpassung der Steuervorrichtung 100. Zum einen wird ein Fahrradlabel 124 bereitgestellt, dass neben dem geänderten Label 116 angepasst wird. Das Fahrradlabel 124 kann beispielsweise ein Bild des Fahrradmodells des Elektrofahrrads 16 und/oder eine Modellbezeichnung umfassen. Es wäre zudem denkbar, dass das geänderte Label 116 ein weiteres Mal angepasst wird. Die Anpassungsdaten können dabei direkt vom zweiten Server 13 übertragen werden oder es erfolgt zunächst eine Verknüpfung des Nutzerkontos des ersten Servers 12 mit dem Nutzerkonto des zweiten Servers 13, sodass zwischen den Servern 12,13 ein Datenaustausch erfolgen kann. In diesem Fall ist auch denkbar, dass die weiteren Anpassungsdaten durch den ersten Server 12 der Steuervorrichtung 100 bereitgestellt werden.

Durch die weiteren Anpassungsdaten wird zudem die Verbindungsoption 118 durch zumindest eine Zusatzfunktion 126 ersetzt, wodurch der Benutzer weitere Informationen zu dem Elektrofahrrad 16 bereitgestellt werden, wie beispielsweise die verbauten Komponenten des Fahrrads, bei denen es sich nicht um Systemkomponente handelt, wie beispielsweise eine Bremse, eine Schaltung, eine Dämpfungseinheit oder dergleichen. Die weiteren Informationen können auch Serviceintervalle für die Systemkomponenten oder die weiteren verbauten Komponenten umfassen.

## Patentansprüche

1. Verfahren zur Anpassung einer Steuervorrichtung (100) für ein Elektrofahrrad (16), wobei die Steuervorrichtung (10) als ein mobiles Gerät, insbesondere ein Smartphone (102) oder eine Smartwatch, ausgebildet ist und eine Anzeigeeinheit (104) umfasst, umfassend folgende Verfahrensschritte:
- Verbindung der Steuervorrichtung (100) mit einem Server (12) über ein erstes Nutzerkonto;
- Verbindung der Steuervorrichtung (100) mit einem Elektrofahrrad (16);
- Bereitstellung einer ersten Fahrrad ID und einer zweiten Fahrrad ID des Elektrofahrrads (16);
- Bereitstellung von Anpassungsdaten des ersten Servers (12) basierend auf der ersten Fahrrad ID, wobei eine Anzeigeeinheit (104) der Steuervorrichtung (100), basierend auf den Anpassungsdaten angepasst wird;
- Verbindung der Steuervorrichtung (100) mit einem zweiten Server (13) über ein zweites Nutzerkonto;
- Bereitstellung von weiteren Anpassungsdaten des zweiten Servers (13) basierend auf der zweiten Fahrrad ID, wobei die Anzeigeeinheit (104) der Steuervorrichtung (100), basierend auf den weiteren Anpassungsdaten angepasst wird.

2. Verfahren nach Anspruch 1, **dadurch gekennzeichnet, dass** der erste Server (12) mit dem zweiten Server (13) zum direkten Datenaustausch verknüpft wird.

3. Verfahren nach einem der vorhergehenden Ansprüche, **dadurch gekennzeichnet, dass** die Verbindung der Steuervorrichtung (100) mit dem Elektrofahrrad (16) über ein Pairing erfolgt.

4. Verfahren nach einem der vorhergehenden Ansprüche, **dadurch gekennzeichnet, dass** die erste Fahrrad ID eine Herstellerkenngröße und/oder eine Markenkenngröße umfasst.

5. Verfahren nach einem der vorhergehenden Ansprüche, **dadurch gekennzeichnet, dass** die zweite Fahrrad ID eine Typkenngröße und/oder eine Artikelkenngröße umfasst.

6. Verfahren nach einem der vorhergehenden Ansprüche, **dadurch gekennzeichnet, dass** die Anzeigeeinheit (104) derart angepasst wird, dass eine Herstellerinformation oder eine Markeninformation angezeigt wird.

7. Steuervorrichtung für ein Elektrofahrrad (16), wobei die Steuervorrichtung (100) zur Steuerung oder Regelung des Elektrofahrrads (16) ausgebildet ist, wobei die Steuervorrichtung (100) lösbar mit dem Elektrofahrrad (16) verbindbar ausgebildet ist, wobei die Steuervorrichtung (100) eine Anzeigeeinheit (104) umfasst, **dadurch gekennzeichnet, dass** die Steuervorrichtung (100) nach einem Verfahren nach Anspruch 1 anpassbar ausgebildet ist, wobei die Steuervorrichtung (10) als ein mobiles Gerät, insbesondere ein Smartphone (102) oder eine Smartwatch, ausgebildet ist.

## Claims

1. Method for adapting a control device (100) for an electric bicycle (16), wherein the control device (10) is designed as a mobile device, in particular a smartphone (102) or a smartwatch, and comprises a display unit (104), comprising the following method steps:
- connecting the control device (100) to a server (12) via a first user account;
- connecting the control device (100) to an electric bicycle (16);
- providing a first bicycle ID and a second bicycle ID of the electric bicycle (16);
- providing adaptation data of the first server (12) on the basis of the first bicycle ID, wherein a display unit (104) of the control device (100) is adapted on the basis of the adaptation data;
- connecting the control device (100) to a second server (13) via a second user account;
- providing further adaptation data of the second server (13) on the basis of the second bicycle ID, wherein the display unit (104) of the control device (100) is adapted on the basis of the further adaptation data.

2. Method according to Claim 1, **characterized in that** the first server (12) is linked to the second server (13) for direct data exchange.

3. Method according to either of the preceding claims, **characterized in that** the connecting of the control device (100) to the electric bicycle (16) is carried out via pairing.

4. Method according to any of the preceding claims, **characterized in that** the first bicycle ID comprises a manufacturer characteristic variable and/or a brand characteristic variable.

5. Method according to any of the preceding claims, **characterized in that** the second bicycle ID comprises a type characteristic variable and/or an item characteristic variable.

6. Method according to any of the preceding claims, **characterized in that** the display unit (104) is adapted in such a way that manufacturer information or brand information is displayed.

7. Control device for an electric bicycle (16), wherein the control device (100) is designed to control or regulate the electric bicycle (16), wherein the control device (100) is designed to be releasably connectable to the electric bicycle (16), wherein the control device (100) comprises a display unit (104), **characterized in that** the control device (100) is designed to be adaptable according to a method according to Claim 1, wherein the control device (10) is designed as a mobile device, in particular a smartphone (102) or a smartwatch.

## Revendications

1. Procédé d'adaptation d'un dispositif de commande (100) pour un vélo électrique (16), le dispositif de commande (10) étant formé comme un appareil mobile, en particulier un téléphone intelligent (102) ou une montre intelligente, et comprenant une unité d'affichage (104), comprenant des étapes de procédé suivantes :
- raccordement du dispositif de commande (100) à un serveur (12) par un premier compte utilisateur ;
- raccordement du dispositif de commande (100) à un vélo électrique (16) ;
- fourniture d'un premier ID de vélo et d'un deuxième ID du vélo électrique (16) ;
- fourniture de données d'adaptation du premier serveur (12) sur la base du premier ID de vélo, une unité d'affichage (104) du dispositif de commande (100) étant adaptée sur la base des données d'adaptation ;
- raccordement du dispositif de commande (100) à un deuxième serveur (13) par un deuxième compte utilisateur ;
- fourniture d'autres données d'adaptation du deuxième serveur (13) sur la base du deuxième ID de vélo, l'unité d'affichage (104) du dispositif de commande (100) étant adaptée sur la base des autres données d'adaptation.

2. Procédé selon la revendication 1, **caractérisé en ce que** le premier serveur (12) est relié au deuxième serveur (13) pour un échange direct de données.

3. Procédé selon l'une des revendications précédentes, **caractérisé en ce que** le dispositif de commande (100) est raccordé au vélo électrique (16) par un appariement.

4. Procédé selon l'une des revendications précédentes, **caractérisé en ce que** le premier ID de vélo comprend une grandeur caractéristique de fabricant et/ou une grandeur caractéristique de marque.

5. Procédé selon l'une des revendications précédentes, **caractérisé en ce que** le deuxième ID de vélo comprend une grandeur caractéristique de type et/ou une grandeur caractéristique d'article.

6. Procédé selon l'une des revendications précédentes, **caractérisé en ce que** l'unité d'affichage (104) est adaptée de telle manière que des informations de fabricant ou de marque sont affichées.

7. Dispositif de commande pour un vélo électrique (16), le dispositif de commande (100) étant formé pour la commande ou la régulation du vélo électrique (16), le dispositif de commande (100) pouvant être raccordé de manière amovible au vélo électrique (16), le dispositif de commande (100) comprenant une unité d'affichage (104), **caractérisé en ce que** le dispositif de commande (100) est formé de manière adaptable selon un procédé selon la revendication 1, le dispositif de commande (10) étant formé comme un appareil mobile, en particulier un téléphone intelligent (102) ou une montre intelligente.
